Europäisches Patentamt

European Patent Office

Office européen des brevets

(19)

(11) Veröffentlichungsnummer: **0 274 006 B1**

(12) **EUROPÄISCHE PATENTSCHRIFT**

(45) Veröffentlichungstag der Patentschrift:
**18.07.90**

(51) Int. Cl.⁵: **F28F 9/02**

(21) Anmeldenummer: **87114080.2**

(22) Anmeldetag: **26.09.87**

(54) Vorrichtung zum Wärmetausch zwischen einem einen NH3-Konverter verlassenden Kreislaufgas und Wasser.

(30) Priorität: **06.12.86 DE 3641710**

(43) Veröffentlichungstag der Anmeldung:
**13.07.88 Patentblatt 88/28**

(45) Bekanntmachung des Hinweises auf die Patenterteilung:
**18.07.90 Patentblatt 90/29**

(84) Benannte Vertragsstaaten:
**AT BE DE ES FR GB IT NL**

(56) Entgegenhaltungen:
**EP-A- 0 130 361
AT-B- 321 329
DE-A- 3 022 480
DE-C- 3 533 219
FR-A- 485 126
FR-A- 2 137 971
FR-A- 2 382 667
GB-A- 2 029 955
GB-A- 2 089 951
US-A- 1 987 891
US-A- 4 117 885**

(73) Patentinhaber: **Uhde GmbH, Friedrich-Uhde-Strasse 15,
D-4600 Dortmund 1(DE)**

(72) Erfinder: **Brieke, Hans-Guenther, Godekinstrasse 55,
D-4600 Dortmund 30(DE)**
Erfinder: **Marsch, Hans-Dieter, Dipl.-Ing.,
Overhoffstrasse 193, D-4600 Dortmund 76(DE)**

(74) Vertreter: **Patentanwälte Meinke und Dabringhaus
Dipl.-Ing. J. Meinke Dipl.-Ing. W. Dabringhaus,
Westenhellweg 67, D-4600 Dortmund 1(DE)**

## Beschreibung

Die Erfindung betrifft eine Vorrichtung zum Wärmetausch zwischen einem einen NH₃-Konverter verlassenden Kreislaufgas und Wasser mit vom Kreislaufgas durchströmten Wärmetauscherrohren, die gasdicht mit mindestens einem eine druckfeste Vorkammer und eine Wärmetauscherkammer trennenden Rohrboden verbunden sind, wobei die Vorkammer wenigstens eine das Kreislaufgas zuführende Glocke und eine die Glocke umgebende Sammelkammer für das Abführen des gekühlten Kreislaufgases aufweist.

Eine derartige Vorrichtung ist aus der DE-A 3 022 480 der Anmelderin bekannt. Bei dieser Vorrichtung ist das durch den Rohrboden zurückgeführte, abgekühlte Kreislaufgas derart geführt, daß die Einlaßbereiche der Wärmetauscherrohre und damit auch der Rohrboden teilweise gekühlt wird, so daß eine gewisse Kühlung des Rohrbodens erreichbar ist, die jedoch noch nicht ausreichend ist, um die Temperaturbelastung des Rohrbodens zu verringern. Aus der EP-A 0 130 361 der Anmelderin ist eine allgemeine Lösung zur Kühlung eines Rohrbodens bekanntgeworden. Der dort beschriebene Rohrboden ist im wesentlichen waagerecht angeordnet und wenigstens bereichsweise mit Kühlbohrungen ausgestattet, die zur heißen Seite hin geschlossen sind und mit einem zusätzlichen inneren Röhrchen ausgebildet sind, derart, daß das Wärmetauscherwasser in das Röhrchen im Naturumlauf eingesogen, das Wasser in der Kühlbohrung verdampft wird und das entstehende Wasser-Dampfgemisch in den Wärmetauscher zurückströmt. Zeigt diese Art der Kühlung dickwandiger, wenigstens auf einer Seite heißer Bauteile bereits besondere Vorteile, so besteht wenigstens ein Nachteil bei dieser Lösung darin, daß durch den Naturumlauf die Bauteile im wesentlichen waagerecht angeordnet werden müssen, damit das Kühlwasser mit gesicherter Umlaufmenge in die Kühlbohrungen eintreten und dort verdampfen und das Dampf-Wassergemisch wieder austreten kann.

Aus der GB-A 2 029 955 ist ein Wärmetauscher mit je einem Rohrboden am Eintritt und am Austritt bekannt, zwischen dem Wärmetauscherrohre angeordnet sind. Der dort zwischen Vorkammer und Wärmetauscherkammer angeordnete Rohrboden weist keine zusätzlichen Kühleinrichtungen in Form von Kühlbohrungen oder dgl. auf, vielmehr wird die Entstehung zu heißer Temperaturen im Rohrboden durch Verwendung einer dünnen Rohrplatte zu vermeiden versucht. Der am oberen Ende der Vorrichtung angeordnete Rohrboden ist dagegen mit zusätzlichen Kühlbohrungen versehen, welche im Fußbereich mit Speisebohrungen verbunden sind, die in eine Wasserabführung münden.

Ferner ist aus der DE-C 3 533 219 ein Rohrbündelwärmetauscher bekannt, dessen Rohre in Rohrplatten gehalten sind, von denen eine dünn ausgebildet und über Tragfinger auf einer zusätzlichen Tragplatte abgestützt ist, die von den Rohren lose durchdrungen ist, wobei die Rohre beim Durchtritt durch die Tragplatte jeweils von einem Ringspalt umgeben sind, durch den Kühlwasser leitbar ist. Es erfolgt somit eine Kühlung in der Tragplatte durch Kühlöffnungen und damit mittelbar auch der dünnen Rohrplatte. Eine andere Lösung zur Kühlung eines heißen Rohrbodens ist aus der DE-A 2 007 528 der Anmelderin bekannt, bei der der heiße Rohrboden durch besondere Gasführung des Synthesegases zu entlasten versucht wird. Es erfolgt zwar bei allen vorgenannten Lösungen eine gewisse, unterschiedlich befriedigende Kühlung des Rohrbodens, aber ansonsten keine Kühlung der weiteren, mit heißem Kreislaufgas beaufschlagten Bauteile.

Aufgabe der Erfindung ist die Schaffung einer Lösung, mit der bei einer gattungsgemäßen Vorrichtung eine Kühlung der mit heißem Kreislaufgas beaufschlagten Bauteile unabhängig von der Aufstellweise der Vorrichtung sicher aufrechterhalten werden kann, d.h. die Kühlung soll völlig unabhängig von der Einbaulage der einzelnen Vorrichtungselemente sein.

Bei einer Vorrichtung der eingangs bezeichneten Art wird diese Aufgabe gemäß der Erfindung dadurch gelöst, daß der Rohrboden zusätzlich mit Wasser/Wasser-Dampfgemisch durchströmten Kühlbohrungen versehen ist, welche den Rohrboden von der Wärmetauscherseite her nicht vollständig durchdringen und in ihren Fußbereichen über Speisebohrungen mit einer Wasserzuführung verbunden sind, durch die das zugeführte Wasser über die Kühlbohrungen in die Wärmetauscherkammer eingespeist wird, und daß die Zuführleitung zur außengekühlten Glocke im zugehörigen Auslaßstutzen der Vorkammer angeordnet und der verbleibende Ringraum im Auslaßstutzen von gekühltem Kreislaufgas durchströmt ist.

Durch diese Ausgestaltung wird völlig unabhängig von der Einbaulage der einzelnen Vorrichtungselemente eine zuverlässige Kühlung sämtlicher mit heißem Kreislaufgas beaufschlagter Bauteile erzielt. Erfindungsgemäß wird dabei sowohl eine ausreichende Kühlung des Rohrbodens durch zwangsweise eingeleitetes Kühlwasser als auch eine Kühlung des ebenfalls mit heißem Kreislaufgas beaufschlagten Einlaßstutzens der Vorrichtung erreicht.

Die hier vorgesehenen Kühlbohrungen müssen grundsätzlich gleichmäßig über mindestens den heißen Bereich des Rohrbodens verteilt sein. Auch kann es je nach Bauweise genügen, nur besonders heiße Zonen zu kühlen, so daß die Erfindung in Ausgestaltung vorsieht, daß der Rohrboden segmentweise mit über Speisebohrungen verbundenen Kühlbohrungen versehen ist.

Besonders zweckmäßig kann es sein, wenn die Kühlwasserleitung als Abzweigleitung von der Speisewasserzuführleitung ausgebildet ist, d.h. durch die Kühlbohrungen wird ein Teil des ohnehin den Wärmetauscher beaufschlagenden Speisewasser direkt zugeführt.

Statt der direkten Verbindung zwischen Speisewasserzuführleitung und Kühlwasserleitung kann auch vorgesehen sein, daß die Kühlwasserleitung an den Wasserumlauf des Dampferzeugers angeschlossen ist, wobei die vorgenannte Maßnahme dies selbstverständlich nicht ausschließt.

In besonderer Ausgestaltung sieht die Erfindung vor, daß die Vorkammer geteilt ausgebildet ist und mindestens zwei Kreislaufgas zuführende Glocken für unterschiedliche NH₃-Konverter Austrittsgase sowie zugehörige Sammelkammern für die gekühlten Kreislaufgase aufweist, wobei mindestens eine der Zuführleitungen zu den außengekühlten Glocken im zugehörigen Auslaßstutzen angeordnet ist. Diese Maßnahme führt zu einer besonders kompakten Bauweise, wobei auch eine stufenweise Kühlung gleichen Kreislaufgases in unterschiedlichen Temperaturstufen in einem gemeinsamen Gehäuse vorgesehen sein kann.

Es wurde bereits erwähnt, daß es ganz unterschiedliche Bauweisen von Wärmetauschern gibt. Diese können in stehender oder liegender oder auch schräger Stellung angeordnet sein. Sie können nur einen Rohrboden aufweisen und dann die Kreislaufgas führenden Rohre als U-fömig gebogene lange Rohrschlangen ausbilden, d.h. diese Rohre beginnen im Rohrboden und enden auch dort wieder, allerdings in einem anderen Segment. Auf diese Bauweise ist die Erfindung allerdings nicht beschränkt, so sieht sie auch vor, daß eine Vorrichtung der gattungsgemäßen Art mit zwei Rohrböden versehen ist, mit jedem Rohrboden zugeordneter Vorkammer, wobei in einem solchen Falle die Erfindung vorsieht, daß auch die zweite Vorkammer in zwei Umlenkkammern für zwei unterschiedliche NH₃-Konvertergase geteilt ist, wobei wenigstens einer der Rohrböden mit Kühlbohrungen ausgebildet ist.

Die Erfindung ist nachstehend anhand der Zeichnung beispielsweise näher erläutert, diese zeigt in

Fig. 1 eine Vorrichtung zum Wärmetausch mit gekühltem Rohrboden,

Fig. 2 ein abgewandeltes Ausführungsbeispiel mit zwei Rohrböden, wobei wenigstens einer gekühlt ist,

Fig. 3 ein abgewandeltes Ausführungsbeispiel einer Gestaltung gemäß Fig. 2,

Fig. 4 einen Wärmetauscher mit gegenläufigen Wärmetauscherrohren und Vor- und Umströmkammern, wobei jeder der beiden Rohrböden wenigstens bereichsweise gekühlt ist,

Fig. 5 eine weitere Ausführungsvariante eines Wärmetauschers mit wenistens bereichsweise gekühlten zwei Rohrböden, wobei alle Fig. 1 bis 5 die Vorrichtungen im Prinzip und in geschnittener Darstellung wiedergeben,

Fig. 6 einen Querschnitt durch eine Vorkammer in einer Ausgestaltung,

Fig. 7 die gleiche Darstellungsweise einer Vorkammer in anderer Gestaltung,

Fig. 8 Anordnung von Bohrungen mit Kühlbohrungen bei einer Gestaltung gemäß Fig. 6 im Rohrboden,

Fig. 9 die Bohrungen in einem Rohrboden bei einer Gestaltung gemäß Fig. 7.

Vorab sei bemerkt, daß in den Figuren durchgängig dann die gleichen Bezugszeichen benutzt werden, wenn es sich um funktionsmäßig gleiche oder ähnliche Teile handelt, ggf. wird noch mit Kleinbuchstaben variiert.

Die in den Figuren dargestellte, allgemein mit 1 bezeichnete Vorrichtung zum Wärmetausch besteht aus einem druckfesten Gehäuse 2 mit zwei Kammern, nämlich einer Wärmetauscherkammer 3 und einer von einer Trennwand 4 in zwei Be reiche geteilten Vorkammer 5 mit dem einen Vorkammerbereich 5a und dem anderen Vorkammerbereich 5b. Die Vorkammer 5 und die Wärmetauscherkammer 3 werden von einem Rohrboden 6 getrennt.

Im dargestellten Beispiel nach den Figuren liegt eine Besonderheit darin, daß in einem Gehäuse 2 zwei Wärmetauscher angeordnet sind, was zu der über die Trennwand 4 geteilten Vorkammer 5 führt. Wesentlich ist die Ausgestaltung des Rohrbodens, auf die weiter unten noch näher eingegangen wird. Zunächst zur grundsätzlichen Bauweise der Vorrichtung 1.

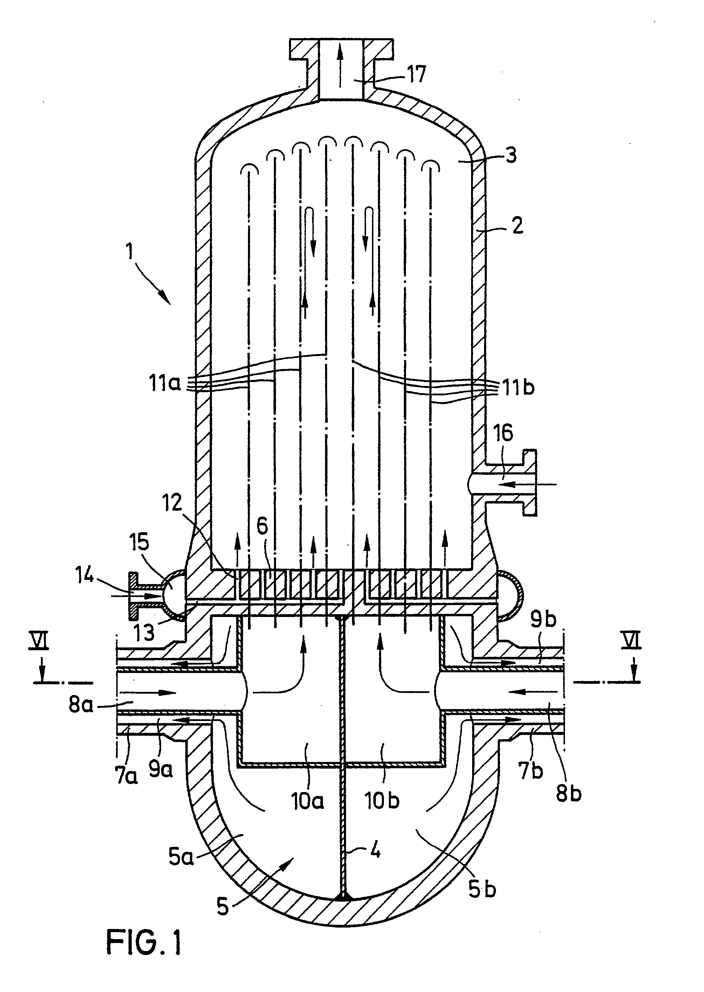

Jede der Vorkammern 5a bzw. 5b ist mit einem nur andeutungsweise wiedergegebenen Rohrstutzen 7a bzw. 7b ausgerüstet, der mit einem inneren Zuführrohr 8a bzw. 8b ausgestattet ist, das zentrisch im Rohrstutzen 7a bzw. 7b derart gelagert ist, daß ein Ringraum 9a bzw. 9b entsteht. Die Rohrstutzen 8a bzw. 8b führen zu Heißgasvorkammern bzw. Glocken 10a bzw. 10b, die den Rohrboden 6 segmentweise beaufschlagen. Dort sind die Wärmetauscherrohre, allgemein mit 11a bzw. 11b bezeichnet, im Darstellungsbeispiel gemäß Fig. 1 sind die U-förmig gebogen, d.h. sie führen durch die Wärmetauscherkammer 3 und weisen am oberen Ende einen Bogen auf und führen in den Rohrboden 6 derart zurück, daß die gekühlten Gase zurück in die Vorkammer 5a bzw. 5b strömen und dort über die Ringräume 9a bzw. 9b ausgeleitet werden, wodurch es gelingt, die Rohrstutzen 7a und 7b auf einer gleich niedrigen Temperaturen wie die Wandungen der Vorkammer 5 zu halten.

Die Gestaltung der Vorkammern und der Gasführung kann noch in vielfacher Weise abgeändert werden; einige Varianten sind nachfolgend noch näher beschrieben. Die wesentlichen Gestaltungselemente sind bei den nachfolgenden Ausführungsbeispielen gleich.

Für die Erfindung von besonderer Bedeutung ist die Gestaltung des Rohrbodens 6. Dieser weist, wie dargestellt, eine Reihe von Kühlbohrungen 12 auf, die zur Seite der Wärmetauscherkammer 3 hin offen sind, den Rohrboden 6 allerdings nicht ganz durchsetzen, vielmehr an ihren Fußenden über Speisebohrungen 13 miteinander verbunden sind. Diese Speisebohrungen 13 sind außen mit einer Wasserzuführung 14 verbunden, die beispielsweise über einen halbkreisförmigen Kühlring 15 die Vorrichtung 1 umfaßt.

Das Wärmetauschermittel, z.B. Wasser, zur Erzeugung von Dampf bzw. ein Wasser/Dampfgemisch wird einem Zuführstutzen 16 der Wärmetauscherkammer 3 zugeführt, das erhitzte Medium bzw. verdampfte Medium oder ein entsprechendes Gemisch verläßt die Wärmetauscherkammer 3 über einen Stutzen 17.

Für die Erfindung ist entscheidend, daß das den Rohrboden 6 kühlende Medium das gleiche ist wie das Wärmetauschermedium, welches über den Stutzen 16 der Wärmetauscherkammer 3 zugeführt wird, da sich diese Medien unmittelbar bestimmungsgemäß vermischen, da das über die Wasserzuführung 14 eintretende Wasser direkt in die Wärmetauscherkammer 3 über die Kühlbohrungen 12 eingespeist wird.

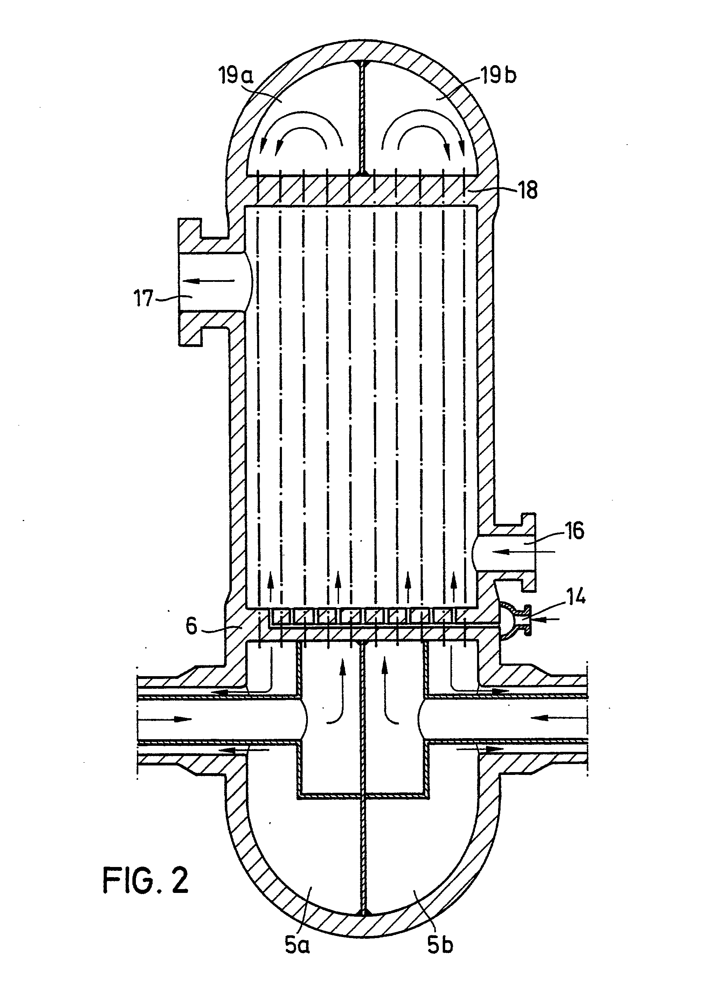

Das Ausführungsbeispiel gemäß Fig. 2 weist im wesentlichen die gleiche Gestaltung der Vorrichtung 1 auf, allerdings mit dem Unterschied, daß zwei Rohrböden 6 bzw. 18 vorgesehen sind, mit zwei Vorkammern 5a und 5b sowie zwei Umlenkkammern 19a und 19b.

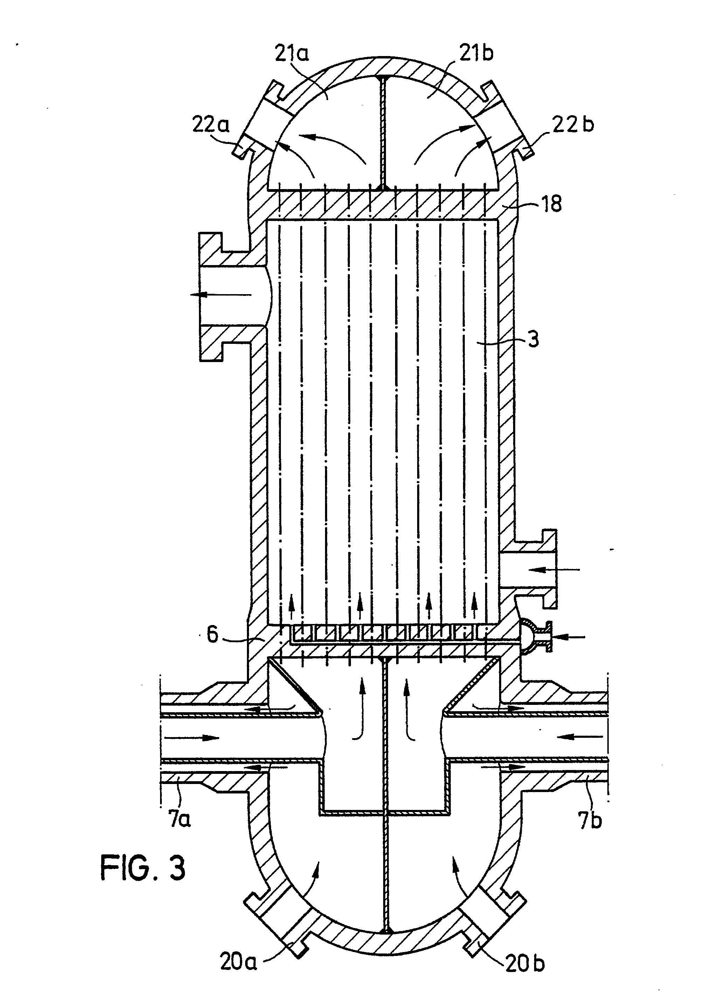

Die Fig. 3 zeigt wiederum ein abgewandeltes Ausführungsbeispiel ebenfalls mit zwei Rohrböden 6 und 18. Hier wird allerdings das zu kühlende Medium ohne Umlenkung durch die Wärmetauscherkammer 3 geleitet. Hier sind die Vorkammerstutzen 7a und 7b durch ein über die Rohrstutzen 20a und 20b eintretendes Kühlmedium gesondert gekühlt. Dies kann natürlich das Prozeßgas sein, welches die Kammern 21a und 21b über die Rohrstutzen 22a bzw. 22b verläßt. Dies kann natürlich auch ein anderes Medium sein.

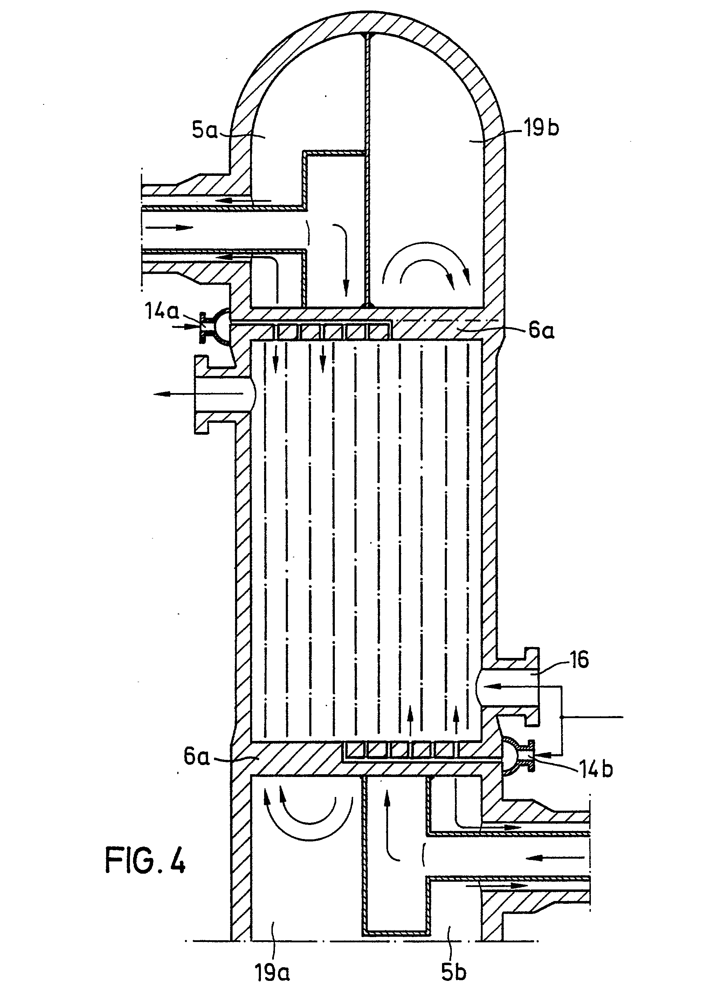

War bei den Vorrichtungsgestaltungen nach den Fig. 2 und 3 nur einer der beiden Rohrböden 6 bzw. 18 gekühlt (in den dargestellten Fällen handelt es sich jeweils um den Rohrboden 6), so zeigt Fig. 4 eine Ausgestaltungsvariante mit zwei wenigstens bereichsweise gekühlten Rohrböden, die aus diesem Grunde beide die Bezugsziffer 6a tragen. Dort sind die Ströme der beiden Wärmetauscher entgegengesetzt gerichtet innerhalb eines gemeinsamen Gehäuses angeordnet, d.h. jeder Vorkammer 5a bzw. 5b steht eine Umlenkkammer 19a bzw. 19b gegenüber. Hier sind wegen der Besonderheit der Rohrbodenkühlung jeweils zwei Wasserzuführungen 14a bzw. 14b vorgesehen.

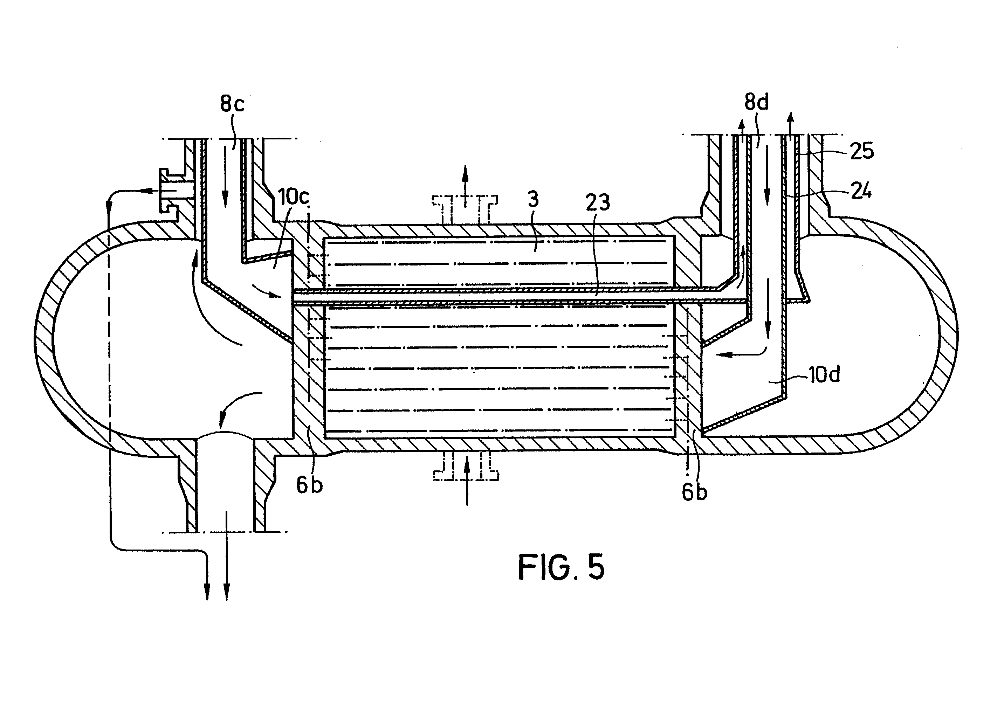

Eine wiederum etwas abgewandelte Ausführungsform sieht die Fig. 5 schematisch vor. Hier ist eine liegende Bauweise eines Wärmetauschers angedeutet. Selbstverständlich können auch die anderen Ausführungsbeispiele in liegender Anordnung in der Praxis vorgesehen sein, hierauf kommt es nach der Erfindung nicht an.

Bei der Gestaltung nach Fig.5 sind nicht die Vorkammern bzw. Umlenkkammern geteilt ausgebildet. Hier durchströmen zwei Gasströme im Gegenstrom die Wärmetauscherkammer 3 über zwei Heißgaseintrittsstutzen 8c bzw. 8d. Diese Heißgaseintrittsstutzen beaufschlagen Kammern 10c bzw. 10d, die die Wärmetauscherrohre in den Rohrböden 6b beaufschlagen. Die Rohrböden 6b sind wiederum wenigstens bereichswei se wassergekühlt. Handelt es sich z.B. bei dem Medium um heißes Kreislaufgas, welches über dem Rohrstutzen 8c der Vorkammer 10c zugeführt wird, so kann zusätzlich eine den gesamten Wärmetauscher durchlaufende ggf. regulierbare Bypassleitung 23 vorgesehen sein, die für eine Durchströmung eines Ringraumes 24 um den Rohrstutzen 8d sorgt, wobei dieser Ringraum 24 einerseits von gekühltem Prozeßmedium außengekühlt über einen Ringraum 25 ausgebildet ist.

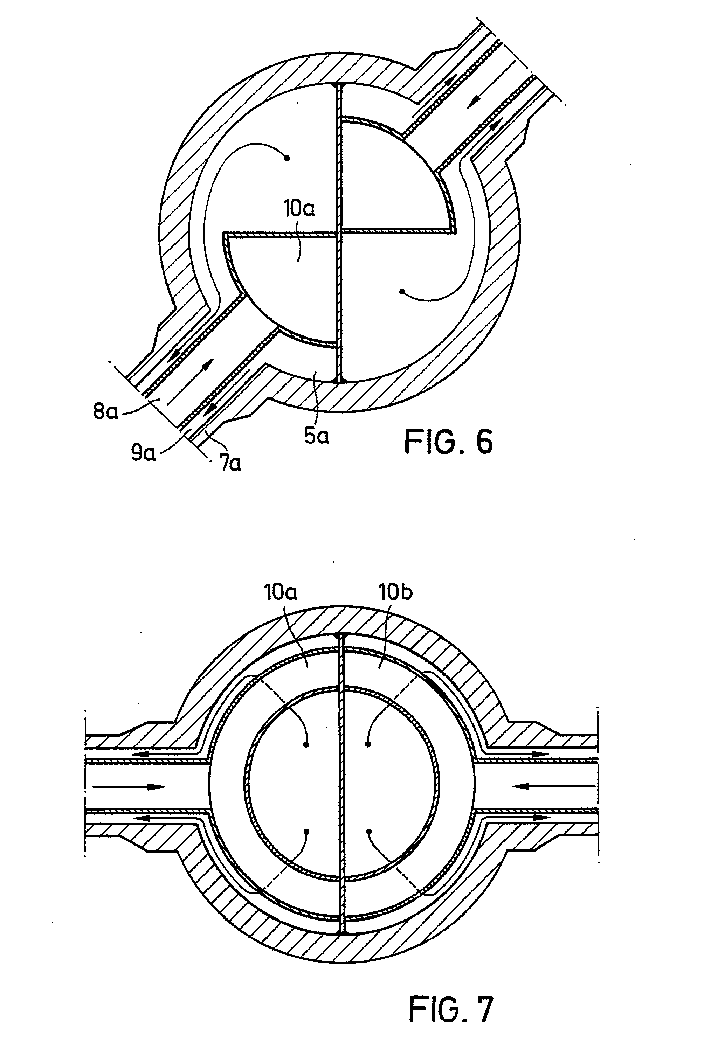

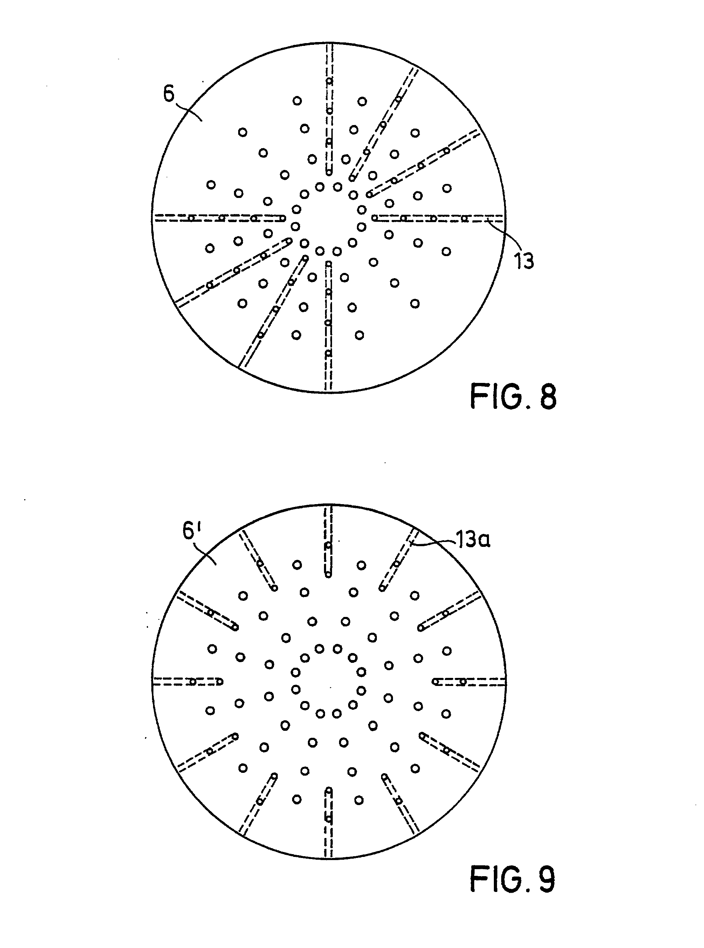

Die Fig. 6 zeigt einen Schnitt durch eine Vorkammer 5 etwa gemäß Linie VI-VI in Fig. 1. Die zugehörige Bohrungsverteilung im Rohrboden 6 zeigt die Fig. 8. Erkennbar wird, daß die Speisebohrungen 13 vergleichsweise lang ausgeführt werden müssen, da sie auch die im Inneren angeordneten Kühlbohrungen 12 erreichen müssen.

Eine andere Gestaltung sieht demgegenüber die Fig. 7 bzw. 9 vor. Hier werden die Kammern 10a bzw. 10b vergleichsweise weit außen am Rohrboden angeordnet, so daß nur kurze Speisebohrungen 13a (Fig. 9) vorgesehen sein müssen. Dies kann fertigungstechnische und kostengünstige Vorteile aufweisen.

Anstelle der Wasserkühlung können auch andere Kühlmedien vorgesehen sein. Variationsmöglichkeiten ergeben sich auch für die Kühlbohrungen.

**Patentansprüche**

1. Vorrichtung zum Wärmetausch zwischen einem einen NH₃-Konverter verlassenden Kreislaufgas und Wasser mit vom Kreislaufgas durchströmten Wärmetauscherrohren (11a, 11b), die gasdicht mit mindestens einen eine druckfeste Vorkammer (5) und eine Wärmetauscherkammer (3) trennenden Rohrboden (6) verbunden sind, wobei die Vorkammer (5) wenigstens eine das Kreislaufgas zuführende Glocke (10) und eine die Glocke (10) umgebende Sammelkammer für das Abführen des gekühlten Kreislaufgases aufweist, dadurch gekennzeichnet, daß der Rohrboden (6) zusätzlich mit Wasser/Wasser-Dampfgemisch durchströmten Kühlbohrungen (12) versehen ist, welche den Rohrboden (6) von der Wärmetauscherseite her nicht vollständig durchdringen und in ihren Fußbereichen über Speisebohrungen (13) mit einer Wasserzuführung (14) verbunden sind, durch die das zugeführte Wasser über die Kühlbohrungen (12) in die Wärmetauscherkammer (3) eingespeist wird, und daß die Zuführleitung zur außengekühlten Glocke (10) im zugehörigen Auslaßstutzen (7) der Vorkammer (5) angeordnet und der verbleibende Ringraum (9) im Auslaßstutzen (7) von gekühltem Kreislaufgas durchströmt ist.

2. Vorrichtung nach Anspruch 1, dadurch gekennzeichnet, daß der Rohrboden (6) segmentweise mit über Speisebohrungen (13) verbundenen Kühlbohrungen (12) versehen ist.

3. Vorrichtung nach Anspruch 1 oder 2, dadurch gekennzeichnet, daß die Kühlwasserleitung (14) als Abzweigleitung von der Speisewasserzuführleitung (16) ausgebildet ist (Fig. 4).

4. Vorrichtung nach einem der vorangehenden Ansprüche, dadurch gekennzeichnet, daß die Kühlwasserleitung (14) an den Wasserumlauf des Dampferzeugers angeschlossen ist.

5. Vorrichtung nach einem der vorangehenden Ansprüche, dadurch gekennzeichnet, daß die Vorkammer (5) geteilt ausgebildet ist und mindestens zwei kreislaufgaszuführende Glocken (10a, 10b) für unterschiedliche NH₃-Konverteraustrittsgase sowie zugehörige Sammelkammern für die gekühlten Kreislaufgase aufweist, wobei mindestens eine der Zuführleitungen (8) zu den außen gekühlten Glocken (10) im zugehörigen Auslaßstutzen (7) angeordnet ist.

## Claims

1. Apparatus for heat exchange between a recycle gas leaving an NH₃-converter and water, comprising heat exchanger tubes (11a, 11b) through which the recycle gas flows and which are gas-tightly connected to at least one tube plate (6) separating a pressure-resistant pre-chamber (5) and a heat exchanger chamber (3), wherein the pre-chamber (5) has at least one bell (10) for supplying the recycle gas and a collecting chamber surrounding the bell (10) for carrying away the cooled recycle gas, characterised in that the tube plate (6) is additionally provided with cooling bores (12) through which flows a water/steam mixture and which do not completely pass through the tube plate (6) from the heat exchanger side and which are communicated in their base regions by way of feed bores (13) with a water supply (14) through which the supplied water is fed into the heat exchanger chamber (3) by way of the cooling bores (12), and that the supply conduit to the externally cooled bell (10) is arranged in the associated outlet connection (7) of the pre-chamber (5) and the remaining annular space (9) in the outlet connection (7) has cooled recycle gas flowing therethrough.

2. Apparatus according to claim 1 characterised in that the tube plate (6) is segment-wise provided with cooling bores (12) which are connected by way of feed bores (13).

3. Apparatus according to claim 1 or claim 2 characterised in that the cooling water conduit (14) is in the form of a branch conduit from the feed water supply conduit (16) (Figure 4).

4. Apparatus according to one of the preceding claims characterised in that the cooling water conduit (14) is connected to the water circuit of the steam generator.

5. Apparatus according to one of the preceding claims characterised in that the pre-chamber (5) is of a divided configuration and has at least two recycle gas-carrying bells (10a, 10b) for different NH₃-converter discharge gases and associated collecting chambers for the cooled recycle gases, wherein at least one of the supply conduits (8) to the externally cooled bells (10) is arranged in the associated outlet connection (7).

## Revendications

1. Dispositif pour l'échange de chaleur entre un gaz de recyclage sortant d'un convertisseur de NH₃ et de l'eau avec des tubes d'échangeur de chaleur (11a, 11b) parcourus par le gaz de recyclage, qui sont reliés d'une manière étanche aux gaz avec au moins un plateau à tubes (6) séparant une chambre préliminaire résistant à la pression (5) et une chambre d'échangeur de chaleur (3), la chambre préliminaire (5) présentant au moins une cloche (10) amenant le gaz de recyclage et une chambre collectrice entourant la cloche (10) pour l'évacuation du gaz de recyclage refroidi, caractérisé en ce que le plateau à tubes (6) est en outre muni de trous de refroidissement (12) parcourus par un mélange eau/vapeur d'eau, qui ne traversent pas complètement le plateau à tubes (6) du côté de l'échangeur de chaleur et sont reliés à leurs parties inférieures, par des trous d'alimentation (13), à une arrivée d'eau (14), à travers laquelle l'eau amenée est introduite dans la chambre d'échangeur de chaleur (3) par les trous de refroidissement (12), et en ce que la canalisation d'arrivée à la cloche (10) refroidie par l'extérieur est disposée dans la tubulure de sortie (7) de la chambre préliminaire (5) correspondante et en ce que l'espace annulaire (9) restant dans la tubulure de sortie (7) est traversé par du gaz de recyclage refroidi.

2. Dispositif suivant la revendication 1, caractérisé en ce que le plateau à tubes (6) est muni par segments de trous de refroidissement (12) reliés par des trous d'alimentation (13).

3. Dispositif suivant les revendications 1 ou 2, caractérisé en ce que la canalisation d'eau de refroidissement (14) revêt la forme d'une dérivation de la canalisation d'amenée d'eau d'alimentation (16) (fig.4).

4. Dispositif suivant l'une quelconque des revendications précédentes, caractérisé en ce que la canalisation d'eau de refroidissement (14) est raccordée à la circulation d'eau du générateur de vapeur.

5. Dispositif suivant l'une quelconque des revendications précédentes, caractérisé en ce que la chambre préliminaire (5) est subdivisée et présente au moins deux cloches (10a, 10b) amenant le gaz de recyclage pour des gaz de sortie de convertisseur de NH₃ différents ainsi que des chambres collectrices correspondantes pour les gaz de recyclage refroidis, au moins une des canalisations d'amenée (8) aux cloches (10) refroidies de l'extérieur étant disposée dans la tubulure de sortie (7) correspondante.

FIG.1

FIG. 2

FIG. 3

FIG. 4

FIG. 5

EP 0 274 006 B1

FIG. 6

FIG. 7

FIG. 8

FIG. 9